# EUROPEAN PATENT APPLICATION

(11) **EP 3 686 789 A1**
(43) Date of publication of application: **29.07.2020**
(21) Application number: 20153221.5
(22) Date of filing: 22.01.2020
(51) Int. Cl.: G06K 9/00, G06K 9/62

(54) **METHOD AND SYSTEM FOR RESPONDING TO A BUILDING EVENT, AND MEMORIZER**

(30) Priority: 28.01.2019 CN 201910080977
(71) Applicant: Carrier Corporation, Palm Beach Gardens, FL 33418 (US)
(72) Inventor: SHA, Danqing, Pudong New Area, Shanghai (CN); JIA, Zhen, Pudong New Area, Shanghai (CN); ZHOU, Guichun, Pudong New Area, Shanghai (CN); ZHU, Zhengang, Pudong New Area, Shanghai (CN); WAGNER, Timothy C., East Hartford, CT 06108 (US); BIRNKRANT, Michael J., East Hartford, CT 06108 (US)
(74) Representative: Dehns

(57) **Abstract**

The present invention discloses a building event response processing method, a building event response processing system and a storage medium. The building event response processing method comprises steps of: acquiring a current event occurring in a building area; and performing a rating response processing for the event according to a decision tree model, wherein the decision tree model is built by setting respective pre-set rating response processing for each event based on at least feature attributes of the events, and the rating response processing comprises at least a first-level response processing for the event. The present invention can efficiently, intelligently, safely and reliably respond to and process various events, thereby effectively improving the building monitoring level and better ensuring personal and property safety.

## Description

The present invention relates to the field of building monitoring technologies, and in particular, to a building event response processing method, a building event response processing system and a storage medium.

Various types of buildings can provide suitable places for people's production, work and daily lives. There are a large number of appliances and occupants in such buildings. Therefore, there may be quite many events and behaviors, some of which may be normal and safe, while others may be abnormal or even harmful. Especially in modern society, the emergence of numerous high-rise buildings for business, office, residence, etc., on one hand, can bring great convenience to people and significantly improve the quality of their work and life, but on the one hand, imposes higher requirements in such aspects as intelligence, safety and human-friendly monitoring of buildings. If an (emergency) event that occurs in a building area is not properly monitored and processed, undesired and unpredictable property damage and casualties may be caused.

In view of the above, the present invention provides a building event response processing method, a building event response processing system and a storage medium, so as to resolve or at least alleviate one or more of the foregoing problems in the prior art and other problems in other aspects.

First, according to a first aspect of the present invention, a building event response processing method is provided, which comprises steps of:
acquiring a current event occurring in a building area; and
performing a rating response processing for the event according to a decision tree model, wherein the decision tree model is built by setting respective pre-set rating response processing for each event based on at least feature attributes of the events, and the rating response processing comprises at least a first-level response processing for the event.

In the building event response processing method according to the present invention, optionally, the building event response processing method further comprises a step of:
before performing a response processing of the rating response processing for the event, determining true existence of the event by using collected data information related to the event, and after determining that the event is not truly existed, skipping the step of performing the response processing; and/or
after performing a response processing of the rating response processing for the event, determining true existence of the event by using collected data information related to the event, and after determining that the event is truly existed, performing a next level response processing having a higher level than the response processing for the event.

Optionally, the data information comprises data information captured by a sensor arranged in the building area, and the sensor comprises an imaging sensor, an acoustic sensor, a temperature sensor, a humidity sensor, a smoke sensor, an indoor air quality sensor, a gunshot sensor, a light sensor, and a presence sensor.

Optionally, the current event is acquired through detection by a sensor arranged in the building area, and the sensor comprises an imaging sensor, an acoustic sensor, a temperature sensor, a humidity sensor, a smoke sensor, an indoor air quality sensor, a gunshot sensor, a light sensor, and a presence sensor.

Optionally, the feature attribute of the event is defined according to a degree of hazard and/or urgency of the event, the event comprises an accident alarm, a natural disaster alarm, a public hazard behavior alarm, and a message alarm, and the accident alarm comprises a fire alarm, a smoke alarm, a flood alarm, and a device failure alarm.

Optionally, the decision tree model is stored locally and/or in a cloud, and the information about the rating response processing for the event is stored locally and/or in the cloud.

Optionally, the rating response processing comprises a first-level response processing and a second-level response processing, and the first-level response processing comprises:
notifying a building property management staff of event information or sending the event information to a user terminal, wherein the user terminal comprises a mobile terminal; and/or
arranging personnel to process the event on site; and/or
marking and/or maintaining faulty equipment; and/or
transmitting the event information to a local or cloud server for storage;
and/or, the second-level response processing comprises:
   notifying event information within at least part of areas of a building; and/or
   notifying an event processing department of the event information; and/or
arranging personnel to process the event on site; and/or
providing a building evacuation guidance, comprising notifying personnel of an escape path for occupants at a current position, an exit path for evacuation, and/or a current position of safe escape equipment, wherein the safe escape equipment comprises a fire mask, a fire extinguisher, a fire hose, a safety sign, an emergency power supply, and an emergency lighting; and/or
transmitting the event information to a local or cloud server for storage.

In addition, according to a second aspect of the present invention, a building event response processing system is further provided, which comprises:
an event acquiring module, configured to acquire a current event occurring in a building area; and
a response processing module, connected to the event acquiring module and a decision tree model, and configured to perform a rating response processing for the event according to the decision tree model, wherein the decision tree model is built by setting respective pre-set rating response processing for each event based on at least feature attributes of the events, and the rating response processing comprises at least a first-level response processing for the event.

In the building event response processing system according to the present invention, optionally, the building event response processing system further comprises:
a true existence determining module, connected to the event acquiring module and the response processing module, and configured to:
before performing a response processing of the rating response processing for the event, determining true existence of the event by using collected data information related to the event, and after determining that the event is not truly existed, skipping the step of performing the response processing; and/or
after performing a response processing of the rating response processing for the event, determining true existence of the event by using collected data information related to the event, and after determining that the event is truly existed, performing a next level response processing having a higher level than the response processing for the event.

Optionally, the data information comprises data information captured by a sensor arranged in the building area, and the sensor comprises an imaging sensor, an acoustic sensor, a temperature sensor, a humidity sensor, a smoke sensor, an indoor air quality sensor, a gunshot sensor, a light sensor, and a presence sensor.

Optionally, the event acquiring module acquires the current event through detection by a sensor arranged in the building area, and the sensor comprises an imaging sensor, an acoustic sensor, a temperature sensor, a humidity sensor, a smoke sensor, an indoor air quality sensor, a gunshot sensor, a light sensor, and a presence sensor.

Optionally, the feature attribute of the event is defined according to a degree of hazard and/or urgency of the event, the event comprises an accident alarm, a natural disaster alarm, a public hazard behavior alarm, and a message alarm, and the accident alarm comprises a fire alarm, a smoke alarm, a flood alarm, and a device failure alarm.

Optionally, the decision tree model is stored locally or in a cloud, and the information about the rating response processing for the event is stored locally and/or in the cloud.

Optionally, the rating response processing comprises a first-level response processing and a second-level response processing, and the first-level response processing comprises:
notifying a building property management staff of event information or sending the event information to a user terminal, wherein the user terminal comprises a mobile terminal; and/or
arranging personnel to process the event on site; and/or
marking and/or maintaining faulty equipment; and/or
transmitting the event information to a local or cloud server for storage;
and/or, the second-level response processing comprises:
   notifying event information within at least part of areas of a building; and/or
   notifying an event processing department of the event information; and/or
arranging personnel to process the event on site; and/or
providing a building evacuation guidance, comprising notifying personnel of an escape path for occupants at a current position, an exit path for evacuation, and/or a current position of safe escape equipment, wherein the safe escape equipment comprises a fire mask, a fire extinguisher, a fire hose, a safety sign, an emergency power supply, and an emergency lighting; and/or
transmitting the event information to a local or cloud server for storage

In addition, according to a third aspect of the present invention, a storage medium for storing an instruction is further provided, wherein when the instruction is executed, the building event response processing method according to any one as described above is implemented. Thus, the invention provides a computer programme product comprising instructions that, when executed on a building event response processing system, will configure the building event response processing system to carry out a method as discussed above in connection with the first aspect. The computer programme product may be executed on a building event processing system as discussed above in connection with the second aspect.

The principles, features, advantages and the like of the technical solutions of the present invention will be apparent from the following detailed description made with reference to the accompanying drawings. For example, the technical solutions of the present invention have obvious technical advantages compared with the prior art, can adopt a decision tree model and a rating strategy to properly monitor and process various building events, and can integrate various types of sensor data to better implement the corresponding event response processing operation, thereby efficiently, safely and reliably responding to various building events, significantly improving the building monitoring level in such aspects as intelligence, human-friendliness, and safety, and better ensuring personal and property safety.

The technical solutions of the present invention will be described in further detail in the following with reference to the accompanying drawings and embodiments. However, it should be noted that these accompanying drawings are designed merely for explanation and merely intended to conceptually illustrate structure constructions described here, and do not need to be drawn to scale.
FIG. 1 is a schematic flowchart of an embodiment of a building event response processing method.
FIG. 2 is a schematic flowchart of an embodiment using a plurality of sensor data to comprehensively determine true existence of a shooting event alarm and perform a response processing for the alarm.
FIG. 3 is a schematic structural diagram of an embodiment of a building event response processing system, in which an example of a building is also schematically shown.

First, it should be noted that the steps, compositions, features, and advantages of the building event response processing method, the building event response processing system and the storage medium according to the present invention will be described below by way of example, but the descriptions throughout are not intended to impose any restrictions on the present invention.

Moreover, for any single technical feature described or implied in the embodiments mentioned herein, the present invention still allows for any combination or deletion of these technical features (or equivalents thereof) to obtain more other embodiments of the present invention that may not be directly mentioned herein. In addition, in order to simplify the drawings, identical or similar parts and features may be marked in only one or more places in the same drawing. Herein, the technical terms "...terminal", "... module" and the like include elements, apparatuses or devices that can be implemented through hardware, software, or a combination thereof.

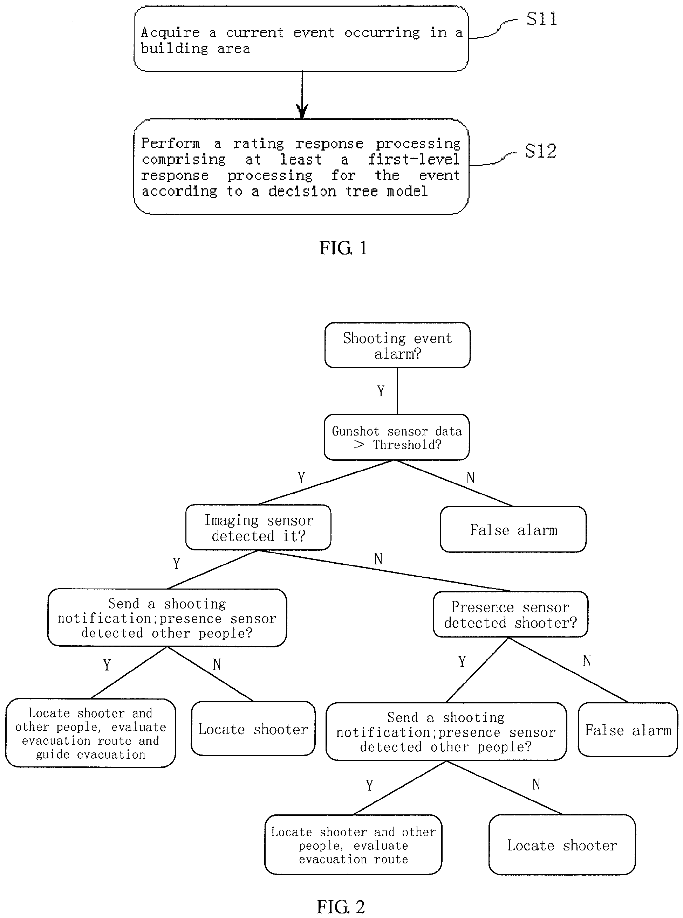

First, referring to FIG. 1, a processing procedure of an embodiment of a building event response processing method according to the present invention is provided in this figure. As an example, this method embodiment may comprise the following steps:
In step S11, a current event occurring in a building area is acquired. Such an event may include, for example, but not limited to, an accident alarm (for example, a fire alarm, a smoke alarm, a flood alarm, or the like), a device failure alarm (for example, failure of an elevator, an air conditioner, a transformer, or the like), a natural disaster alarm (for example, an earthquake, a typhoon, or the like), a public hazard behavior alarm (for example, fighting, gunshot, poison gas leak, chemical and biological attack, or the like), a message alarm (for example, a telephone notification, a network notification, an SMS notification, or the like), and so on.

It should be understood that, for example, the types of events that may actually occur as mentioned above are diversified, and such events may occur in a building area, that is, inside a building, or may occur in a peripheral area of the building.

In some application scenarios, such a building event may be acquired through detection by a sensor arranged inside and/or outside the building. In a specific implementation, various sensors may be used, which may include, for example, but not limited to, an imaging sensor, an acoustic sensor, a temperature sensor, a humidity sensor, a smoke sensor, an indoor air quality (IAQ) sensor, a gunshot sensor, a light sensor, and a presence sensor, and so on. The specific quantities, models, arrangement positions and the like of such sensors may be flexibly set and adjusted according to actual application requirements.

However, it should be understood that in the method of the present invention, the current event occurring in the building area may also be acquired in various other manners such as notification from a person and automatic equipment alarm reporting.

Next, in step S12, a rating response processing may be performed according to a decision tree mode, for the event already acquired in step S11. The decision tree mode will be used as a basis for determining the implementation of corresponding response processing such as a first-level response processing or a second-level response processing, for the event. The details will be described below.

According to the concept of the present invention, a decision tree mechanism may be used in combination with a rating event response strategy to efficiently handle numerous building events in a more intelligent and human-friendly manner. This will be obviously different from the building event response processing manner in the prior art where generally static signs, loudspeakers, and displays are used.

As for the decision tree model, it may be built, based on at least feature attributes of events, by setting respective pre-set rating response processing for each event (e.g., setting a first-level response processing, or higher-level response process that may be subsequently performed step-by-step). For example, generally a degree of hazard and/or urgency of an event may be set as one feature attribute of the event. For example, because extreme events such as gunshot, chemical and biological attack, earthquake, and typhoon are extremely harmful and occurrence of such events in the building area will probably cause unpredictable damage, such events may be set in the decision tree model strictly and properly to be treated with a first-level response processing and higher-level response processing. For example, when the first-level response processing is performed, it is the building manager and so on that may be mainly notified to deal with the event properly. It is not suitable to immediately affect all tenants or residents in the building, avoiding undesired personal injury and loss due to personnel panic. Further, when higher-level response process such as a second-level response processing is performed, safety announcements and so on can be made in a larger area and a bigger crowd.

It should be noted that in some application scenarios, some conditions may be used separately or in combination to build a decision tree model or adjust an existing decision tree model. For example, the rating response processing for a certain event or some events which relate to one or more of, for example, temperature alarm, humidity alarm, fire alarm, smoke alarm, flood alarm and the like related to the environment or equipment in the decision tree model may be modified or adjusted, according to changes in the natural environment (for example, seasonal temperature change, rainfall and snowfall change, temporary drop in temperature, and the like), to avoid false alarms or failure in reporting necessary alarms and thus avoid unintended event response processing operations, so that the method of the present invention can be further improved in such aspects as intelligence, adaptability, and flexibility.

Still referring to FIG. 1, in step S12, a first-level response processing may be performed for the event according to the decision tree model, and it is possible to continue to perform a higher-level response processing for the event. As such, various events occurring in the building area can be properly processed in different manners, to achieve a more efficient, intelligent, human-friendly, safe and reliable event processing mechanism, thereby effectively ensuring personal and property safety.

Optionally, the rating response processing of the event may be set to include two or more levels, and may be stored locally and/or in a cloud for use. For example, the rating response processing of the event may be set to include two levels, namely, first-level response processing and second-level response processing. The response processing manners used for different levels of events may be different or not the same.

For example, as for the first-level response processing, it may be set to control the processing in a certain range and carried out as soon as possible within a certain period of time, and there is no need to make an all-round response immediately (for example, shutting down some equipment in other areas where the event does not occur in the building), so as to avoid unnecessary panic of occupants and even damage or other adverse effects. As an example, for the first-level response processing, one or more of the following response processing manners exemplified below may be used separately or in combination:
notifying working personnel (for example, building property management staff) of event information or sending the event information to a user terminal (for example, a mobile terminal such as a mobile phone), to enable the relevant personnel to learn about or solve the event as quickly as possible;
arranging personnel to process the event on site, so as to solve the event as quickly as possible or minimize the loss or damage;
marking and/or maintaining faulty equipment, so that the equipment can be repaired as quickly as possible to avoid secondary damage; and
transmitting the event information to a local or cloud server for storage, and facilitating data management, troubleshooting and analysis.

For another example, as for the second-level response processing, it may be set to respond immediately and fully so as to avoid unexpected personal and/or property loss. As an example, for the second-level response processing, one or more of the following response processing manners exemplified below may be used separately or in combination:
notifying event information within at least part of areas of a building, for example, notifying occupants on a floor where a fire alarm or the like occurs and several adjacent floors (which may be flexibly set according to the specific application situation) that there is a fire alarm event, and urging the occupants to evacuate as quickly as possible;
notifying an event processing department of the event information, for example, notifying a firefighting department, a security department, a disaster relief department, an equipment manufacturer or maintenance department, an administrative authority and the like, so that professionals can be arranged to solve the event on site as quickly as possible;
arranging personnel to process the event on site, so as to solve the event as quickly as possible or minimize the loss or damage;
transmitting the event information to a local or cloud server for storage, and facilitating data management, troubleshooting and analysis; and
providing a building evacuation guidance, comprising, by means of sending text messages, broadcasting by using smart speakers, etc., and using smart escape signs to guide, for example, notifying personnel of an escape path for occupants at a current position (which may be a preset escape path or an escape path formed by the system after dynamic computing and planning, that is, the currently safest escape path can be provided according to the real-time situation), a current position of safe escape equipment (for example, a fire extinguisher, a fire hose, a fire mask, a safety sign, an emergency power supply, an emergency lighting, or the like), and/or an exit path for evacuation. The exit path may be an optima exit path formed through computation. The information provided above may be used as an on-site guidance for evacuation and escape, allowing occupants to evacuate as quickly as possible or find the safe escape equipment for self-rescue as quickly as possible, thereby protecting the occupants and avoiding tragedies. In addition, during evacuation, the building monitoring personnel may use, for example, an imaging sensor, a light sensor, a presence sensor and the like to carry out site monitoring, and thus provide in real time and adjust in time the evacuation guidance and control operations.

In addition, in some optional embodiments of the method according to the present invention, before and/or after performing a response processing of the rating response processing for the acquired event, true existence of the event may further be determined, so as to avoid false event alarms. If it is determined that the event is not truly existed, the corresponding response processing is skipped; if it is determined that the event is truly existed, a next level response processing that has a higher level than the response processing may be implemented.

In actual applications, the true existence of the event may be determined by using any data information related to the acquired event, for example, data collected by a sensor, a message, or a notification from a person. The use of various sensors has been described in detail above. For example, a smoke detector, a temperature sensor, and/or an imaging sensor may be used separately or in combination to determine and confirm a fire alarm event, an acoustic sensor may be used to determine and confirm a gunshot event, and so on. According to different application requirements, different types of sensor data may be integrated in real time into the process of determining the true existence of the event. That is, various sensor data is allowed to be used complementarily, and they can be fully and flexibly used in the decision tree model. Thereby, the decision tree and rating response strategy described above can be better implemented.

In FIG. 2, an example of determining true existence of a shooting event alarm and the response processing by means of comprehensively using, for example, a shooting sensor, an imaging sensor, a human body sensor, and the like is exemplarily shown. In the example, these sensor data are used complementarily in order to determine whether the shooting event alarm is true or not.

Specifically, as shown in FIG. 2, the situation that the shooting event alarm is a false alarm can be excluded firstly by comparing the data of the gunshot sensor with a pre-set threshold. If it is determined that the gunshot sensor data has indeed exceeded the threshold, the data of the imaging sensor can be used for further determination.

If it is confirmed by the imaging sensor data that a shooting image has already been captured, a shooting notification can be sent. At this time, the shooting notification may be sent only within a pre-set range according to an optional setting in the decision tree model. For example, the shooting notification is only sent to the building manager, etc., that is, a first-level response processing is performed. As such, it will not improperly and immediately result in large-scale crowd panic and confusion, affecting the daily activities of other people such as tenants and residents in the building. Subsequently, the data of presence sensor can be used to further determine whether other people who, for example, are currently in the shooting area or associated areas and likely to be injured, have been detected.

If there are no other people detected, the shooter can located; if other people are detected, the shooter and the detected other people can be located, and then an evacuation route can be evaluated so that the people can be instructed to evacuate. That is, in the above process a second-level response processing is performed. It should be understood that the above-mentioned evacuation guidance may be a dynamic planning process, which is allowed to be designed and adjusted in time according to the dangerous situation and the flow of crowd in the building. Additionally, in the above processes, an automatic execution according to the decision tree model can be conducted, and also an artificial confirmation can be added therein. Furthermore, if the image of the shooting event is not detected by the imaging sensor data, the presence sensor data can be used to further determine whether the shooter has been detected. If it has been detected, a shooting notification may be sent and it may be further determined that whether other people have been detected through the presence sensor data. As for these processes, they can be understood by making references to FIG. 2 and the above descriptions of similar processes, and the details will not be repeatedly.

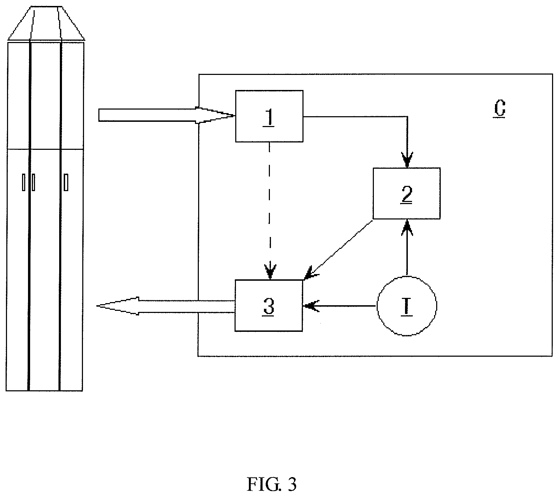

To better understand the technical solutions of the present invention, FIG. 3 schematically shows the structure of an embodiment of a building event response processing system according to the present invention.

As an exemplary example, the embodiment of the system may comprise an event acquiring module 1, a true existence determining module 2, and a response processing module 3. In a specific application, the functions of these modules may be implemented by using a processor C, that is, may be implemented by the processor C by executing instructions stored in a storage medium.

As shown in FIG. 3, in this embodiment, the event acquiring module 1 is configured to acquire a current event occurring in a building area. As described above, such an event may occur inside a building or may occur in a peripheral area of the building, and may be acquired in various manners such as through a sensor, a message, or a notification from a person.

As for the true existence determining module 2, it may be connected to the event acquiring module 1, the response processing module 3 and the decision tree model T, and configured to:
before performing a response processing (for example, a first-level response processing) of the rating response processing for the event, determining true existence of the event by using collected data information related to the event, and after determining that the event is not truly existed, abandoning the start-up of the response processing module 3 to perform the response processing; and/or
after performing a response processing (for example, a first-level response processing) of the rating response processing for the event, determining true existence of the event by using collected data information related to the event, and after determining that the event is truly existed, starting up the response processing module 3 to perform a next level response processing (for example, a second-level response processing) that has a higher level than the response processing for the event.

It should be noted that, in some specific application embodiments, the true existence determining module 2 may be omitted. That is to say, the determining process of true existence of the event may be omitted in some applications so that the response processing module 3 and the event acquiring module 1 may be directly connected. The connection between the above two modules is also schematically shown in FIG. 3 with a dashed line.

As for the response processing module 3, it may be connected to the true existence determining module 2 and the decision tree model T, for performing pre-set rating response processing according to the decision tree model. Therefore, intelligent and user-friendly response processing for various events can be safely and properly implemented. It may be understood that, the technical contents such as the decision tree model, the feature attribute of the event, the event, the graded response processing, the true existence determination of the event, the data information used for determining the true existence of the event, and various sensors have been described in detail in the foregoing description of the building event response processing method of the present invention made with reference to the examples of FIG. 1 and FIG. 2, reference may be made directly to the foregoing specific descriptions of the corresponding parts, and the details will not be repeatedly described in the building event response processing system according to the present invention.

In addition, according to the technical solutions of the present invention, a storage medium is further provided, which is configured to store instructions. When executed by, for example, an execution component, module, or apparatus such as a processor, the instructions are used for implementing, for example, the building event response processing method according to the present invention that is exemplarily described with reference to FIGS. 1 and 2, so as to achieve the above-mentioned obvious advantages of the solutions of the present invention over the prior art.

The building event response processing method, the building event response processing system and the storage medium according to the present invention are described in detail above by way of example only. These examples are only used for describing the principles and implementations of the present invention, and are not intended to limit the present invention. Those of ordinary skill in the art can also make various modifications and improvements without departing from the scope of the present invention, as defined by the claims. Therefore, all equivalent technical solutions shall fall within the scope of the present invention as defined by the appended claims.

## Claims

1. A building event response processing method, comprising steps of:
acquiring a current event occurring in a building area; and
performing a rating response processing for the event according to a decision tree model, wherein the decision tree model is built by setting respective pre-set rating response processing for each event based on at least feature attributes of the events, and the rating response processing comprises at least a first-level response processing for the event.

2. The building event response processing method according to claim 1, further comprising a step of:
before performing a response processing of the rating response processing for the event, determining true existence of the event by using collected data information related to the event, and after determining that the event is not truly existed, skipping the step of performing the response processing; and/or
after performing a response processing of the rating response processing for the event, determining true existence of the event by using collected data information related to the event, and after determining that the event is truly existed, performing a next level response processing having a higher level than the response processing for the event.

3. The building event response processing method according to claim 2, wherein the data information comprises data information captured by a sensor arranged in the building area, and the sensor comprises an imaging sensor, an acoustic sensor, a temperature sensor, a humidity sensor, a smoke sensor, an indoor air quality sensor, a gunshot sensor, a light sensor, and a presence sensor.

4. The building event response processing method according to claim 1, 2 or 3, wherein the current event is acquired through detection by a sensor arranged in the building area, and the sensor comprises an imaging sensor, an acoustic sensor, a temperature sensor, a humidity sensor, a smoke sensor, an indoor air quality sensor, a gunshot sensor, a light sensor, and a presence sensor.

5. The building event response processing method according to any preceding claim 1, wherein the feature attribute of the event is defined according to a degree of hazard and/or urgency of the event, the event comprises an accident alarm, a natural disaster alarm, a public hazard behavior alarm, and a message alarm, and the accident alarm comprises a fire alarm, a smoke alarm, a flood alarm, and a device failure alarm.

6. The building event response processing method according to any preceding claim, wherein the decision tree model is stored locally and/or in a cloud, and the information about the rating response processing for the event is stored locally and/or in the cloud.

7. The building event response processing method according to claim 6, wherein the rating response processing comprises a first-level response processing and a second-level response processing, and the first-level response processing comprises:
notifying a building property management staff of event information or sending the event information to a user terminal, wherein the user terminal comprises a mobile terminal; and/or
arranging personnel to process the event on site; and/or
marking and/or maintaining faulty equipment; and/or
transmitting the event information to a local or cloud server for storage;
and/or, the second-level response processing comprises:
notifying event information within at least part of areas of a building; and/or
notifying an event processing department of the event information; and/or
arranging personnel to process the event on site; and/or
providing a building evacuation guidance, comprising notifying personnel of an escape path for occupants at a current position, an exit path for evacuation, and/or a current position of safe escape equipment, wherein the safe escape equipment comprises a fire mask, a fire extinguisher, a fire hose, a safety sign, an emergency power supply, and an emergency lighting; and/or
transmitting the event information to a local or cloud server for storage.

8. A building event response processing system, comprising:
an event acquiring module, configured to acquire a current event occurring in a building area; and
a response processing module, connected to the event acquiring module and a decision tree model, and configured to perform a rating response processing for the event according to the decision tree model, wherein the decision tree model is built by setting respective pre-set rating response processing for each event based on at least feature attributes of the events, and the rating response processing comprises at least a first-level response processing for the event.

9. The building event response processing system according to claim 8, further comprises:
a true existence determining module, connected to the event acquiring module and the response processing module, and configured to:
before performing a response processing of the rating response processing for the event, determining true existence of the event by using collected data information related to the event, and after determining that the event is not truly existed, skipping the step of performing the response processing; and/or
after performing a response processing of the rating response processing for the event, determining true existence of the event by using collected data information related to the event, and after determining that the event is truly existed, performing a next level response processing having a higher level than the response processing for the event.

10. The building event response processing system according to claim 9, wherein the data information comprises data information captured by a sensor arranged in the building area, and the sensor comprises an imaging sensor, an acoustic sensor, a temperature sensor, a humidity sensor, a smoke sensor, an indoor air quality sensor, a gunshot sensor, a light sensor, and a presence sensor.

11. The building event response processing system according to claim 8, 9 or 10 wherein the event acquiring module acquires the current event through detection by a sensor arranged in the building area, and the sensor comprises an imaging sensor, an acoustic sensor, a temperature sensor, a humidity sensor, a smoke sensor, an indoor air quality sensor, a gunshot sensor, a light sensor, and a presence sensor.

12. The building event response processing system according to any of claims 8 to 11, wherein the feature attribute of the event is defined according to a degree of hazard and/or urgency of the event, the event comprises an accident alarm, a natural disaster alarm, a public hazard behavior alarm, and a message alarm, and the accident alarm comprises a fire alarm, a smoke alarm, a flood alarm, and a device failure alarm.

13. The building event response processing system according to any of claims 8 to 12, wherein the decision tree model is stored locally or in a cloud, and the information about the rating response processing for the event is stored locally and/or in the cloud.

14. The building event response processing system according to claim 13, wherein the rating response processing comprises a first-level response processing and a second-level response processing, and the first-level response processing comprises:
notifying a building property management staff of event information or sending the event information to a user terminal, wherein the user terminal comprises a mobile terminal; and/or
arranging personnel to process the event on site; and/or
marking and/or maintaining faulty equipment; and/or
transmitting the event information to a local or cloud server for storage;
and/or, the second-level response processing comprises:
notifying event information within at least part of areas of a building; and/or
notifying an event processing department of the event information; and/or
arranging personnel to process the event on site; and/or
providing a building evacuation guidance, comprising notifying personnel of an escape path for occupants at a current position, an exit path for evacuation, and/or a current position of safe escape equipment, wherein the safe escape equipment comprises a fire mask, a fire extinguisher, a fire hose, a safety sign, an emergency power supply, and an emergency lighting; and/or
transmitting the event information to a local or cloud server for storage.

15. A computer programme product comprising instructions that, when executed on a building event response processing system, will configure the building event response processing system to carry out a building event response processing method according to any one of claims 1 to 7.
